# EUROPÄISCHE PATENTSCHRIFT

(11) **EP 1 323 015 B1**
(45) Veröffentlichungstag und Bekanntmachung des Hinweises auf die Patenterteilung: **21.12.2005**
(21) Anmeldenummer: 01978377.8
(22) Anmeldetag: 19.09.2001
(51) Int. Cl.: G06F 1/00, G06K 19/073, H05K 1/02

(54) **SICHERHEITSMODUL**
SECURITY MODULE
MODULE DE SECURITE

(30) Priorität: 21.09.2000 DE 10047436
(43) Veröffentlichungstag der Anmeldung: 02.07.2003
(73) Patentinhaber: Giesecke & Devrient GmbH, 81677 München (DE)
(72) Erfinder: GRASSL, Thomas, 85354 Freising (DE)
(74) Vertreter: Klunker, Hans-Friedrich
(86) Internationale Anmeldenummer: PCT/EP2001/010825
(87) Internationale Veröffentlichungsnummer: WO 2002/025411

(56) Entgegenhaltungen:
- EP-A- 0 514 708
- EP-A- 0 540 139
- WO-A-00/28399
- WO-A-88/08176
- US-A- 5 233 505

## Beschreibung

Die vorliegende Erfindung betrifft ein Sicherheitsmodul mit einem Sicherheitsbauelement, einem mit dem Sicherheitsbauelement über sicherheitsrelevante Leiterbahnen verbundenen weiteren Funktionselement und Mitteln zur Detektion von äußeren Einwirkungen auf das Sicherheitsmodul. Darüber hinaus betrifft die Erfindung ein Verfahren zur Herstellung eines solchen Sicherheitsmoduls sowie eine flexible Sicherheitsleiterplatte, die zur Herstellung des Sicherheitsmoduls benötigt wird.

Bei dem Sicherheitsbauelement kann es sich beispielsweise um einen Sicherheitsprozessor mit einem Sicherheitsdatenspeicher handeln. Hierbei ist unter dem Begriff "Sicherheitsprozessor" bzw. "Sicherheitsdatenspeicher" jeder Prozessor bzw. Datenspeicher zu verstehen, der sicherheitsrelevante Daten enthält, die vor einem unbefugten Zugriff geschützt werden müssen. Bei dem Funktionselement kann es sich um ein beliebiges elektronisches Bauelement, beispielsweise eine Ausgabe- oder Eingabeeinheit oder um einen Akkumulator zur Sicherung der Energieversorgung des Sicherheitschips, handeln. Es kann sich aber auch um einen Stecker oder mechanische Aufnahme für eine Chipkarte oder dergleichen handeln. Selbstverständlich ist es auch möglich, daß das Funktionselement ein weiterer Mikroprozessor, evtl. auch ein zweiter Sicherheitsprozessor, oder ein zusätzlicher separater Sicherheitsdatenspeicher ist.

Die genannten Sicherheitsmodule sind in der Lage, beispielsweise kryptografische Schlüssel sehr sicher aufzubewahren und über einen entsprechenden Datenaustausch anderen Anwendungen zur Verfügung zu stellen. Derartige Sicherheitsmodule befinden sich insbesondere in sogenannten Chipkarten-Terminals, die dazu dienen, eine datentechnische Verbindung zu einer Chipkarte herzustellen. Da auf den Chipkarten die sicherheitsrelevanten Daten codiert abgespeichert sind, muß das Sicherheitsmodul bzw. der Sicherheitsprozessor im Besitz der richtigen Schlüssel sein, um die Daten der Chipkarte verarbeiten zu können. Diese Schlüssel sind in der Regel in einem Sicherheitsdatenspeicher abgelegt. Um zu verhindern, daß Unbefugte in den Besitz dieser Schlüsseldaten gelangen und damit Mißbrauch betreiben können, sind spezielle Maßnahmen erforderlich.

Aus der Praxis ist bereits das EFTPOS-Terminal von Giesecke & Devrient bekannt. Bei diesem Terminal wird das gesamte Sicherheitsmodul mit dem Sicherheitsprozessor einschließlich Display, Tastatur und Meßköpfen als eine Einheit vergossen. Innerhalb der Vergußmasse befindet sich ein Lichtsensor. Sobald von diesem Lichtsensor ein Lichteinfall detektiert wird, werden automatisch vom Sicherheitsprozessor die im Sicherheitsdatenspeicher gespeicherten sicherheitsrelevanten Daten gelöscht. Ein unautorisierter Eingriff von außen würde daher das Terminal zwar funktionsuntüchtig machen, jedoch wäre ein Auslesen der sicherheitsrelevanten Daten nicht mehr möglich.

In der US 5,060,261 wird eine Chipkarte beschrieben, deren Mikroschaltung gegen Eingriffe durch mehrere Sensoren geschützt ist, welche einen sogenannten Vorzwangszustand aufweisen. Diese Sensoren reagieren auf mechanische Verformungen. Es sind mehrere Sensoren innerhalb der Chipkarte verteilt, um die gesamte Chipkarte auf Angriffe hin zu überwachen.

Aus der US-Patentschrift US-PS 5,233,505 ist es bekannt, zum Schutz elektronisch gespeicherter Daten eine zu schützende Leiterplatte, die einen gedruckten Schaltkreis, der mit einem Speicher und einer Batterie verbunden ist, enthält, mit schützenden Leiterplatten zu umgeben, auf denen ein gitterförmiger gedruckter Schaltkreis als Eindringschutz vorhanden ist. Siehe Präambel des Anspruchs 1.

Eine ähnliche Schutzvorrichtung ist aus der europäischen Patentanmeldung EP-OS 0 514 708 bekannt. Dort wird ein in einem Gehäuse untergebrachtes Gerät von einer flexiblen Leiterplatte umhüllt, welche mindestens zwei Leiterbahnebenen aufweist. Die Leiter der einzelnen Ebenen verlaufen mäanderförmig, wobei die einzelnen Ebenen unterschiedliche Vorzugsrichtungen der Leiter aufweisen, so daß ein Durchdringen der flexiblen Leiterplatte ohne Beschädigung zumindest eines Leiters nicht möglich ist.

Es ist Aufgabe der Erfindung, ein Sicherheitsmodul bzw. ein Verfahren zur Herstellung eines Sicherheitsmoduls anzugeben, bei dem bei gleichzeitigem möglichst flexiblen und kostengünstigen Aufbau sowie einer breiten variablen Einsatzmöglichkeit die Sicherheit erhöht wird.

Diese Aufgabe wird durch ein Sicherheitsmodul bzw. durch ein Verfahren zur Herstellung des Sicherheitsmoduls sowie eine dazu benötigte flexible Sicherheitsleiterplatte gemäß den unabhängigen Ansprüchen 1, 17 und 23 gelöst. In davon abhängigen Ansprüchen sind vorteilhafte Ausgestaltungen der Erfindung angegeben.

Erfindungsgemäß wird hierbei ein Sicherheitsbauelement auf einer ersten Seite einer flexiblen, mehrere Leiterbahnebenen umfassenden Leiterplatte angeordnet. In mindestens einer ersten Leiterbahnebene sind die sicherheitsrelevanten Leiterbahnen angeordnet. In mindestens einer zweiten Leiterbahnebene, welche von einer der ersten, später innenliegenden Seite der flexiblen Leiterplatte gegenüberliegenden zweiten, später außenliegenden Seite der flexiblen Leiterplatte aus betrachtet vor der ersten Leiterbahnebene mit den sicherheitsrelevanten Daten liegt, ist eine Leiterbahn-Schutzstruktur zur Detektion von äußeren Einwirkungen angeordnet. Die flexible Leiterplatte wird dann so zusammengefaltet, daß das Sicherheitsbauelement und die sicherheitsrelevanten Leiterbahnen von der Leiterbahn-Schutzstruktur umschlossen sind. Die Leiterbahn-Schutzstruktur bildet hierbei quasi eine Schutzhülle für das Sicherheitsbauelement und die sicherheitsrelevanten Leiterbahnen. Die im zusammengefalteten Zustand übereinanderliegenden Flächen der flexiblen Leiterplatte und das dazwischenliegende Sicherheitsbauelement werden unlösbar untereinander verbunden, beispielsweise verklebt oder verschweißt.

Es wird zunächst eine vorzugsweise einteilige flexible Sicherheitsleiterplatte hergestellt. Diese flexible Sicherheitsleiterplatte bzw. Platinenfolie weist mehrere Leiterbahnen auf, wobei in mindestens einer Leiterbahnebene sicherheitsrelevante Leiterbahnen angeordnet sind, welche zur Anbindung an das Sicherheitsmodul an einer Seite, der späteren Innenseite der zusammengefalteten Sicherheitsleiterplatte, Kontaktstellen aufweisen. In einer von dieser Innenseite aus betrachtet hinter den sicherheitsrelevanten Leiterbahnen liegenden weiteren Leiterbahnebene bzw. in mehreren solchen übereinanderliegenden Leiterbahnebenen sind verschiedene Leiterbahn-Schutzstrukturen angeordnet.

Es wird dann das Sicherheitsbauelement mit einer üblichen Technik, vorzugsweise mit COF-Technik, SMD-Technik oder Flip-Chip-Technologie, auf die flexible Leiterplatte aufgebracht. Anschließend kann die das Sicherheitsbauelement aufweisende spätere Innenseite mit einer Klebeschicht versehen werden. Schließlich wird die flexible Sicherheitsleiterplatte so zusammengefaltet, daß die übereinanderliegenden Flächen der flexiblen Leiterplatte mit dem dazwischen angeordneten Sicherheitsbauelement untereinander verklebt werden.

Bei der Erzeugung der Schutzstruktur ist zu beachten, daß diese sich nicht notwendigerweise über die gesamte flexible Leiterplatte erstrecken muß. Ebenso ist es nicht notwendig, die flexible Leiterplatte so zu falten, daß keinerlei Lücken innerhalb der Schutzstruktur entstehen. Entscheidend ist hier lediglich, daß die flexible Leiterplatte mit der Leiterbahn-Schutzstruktur ihren Zweck als Schutzhülle erfüllt. Dies bedeutet, daß etwaige Lücken nur dann erlaubt sind, wenn sie nicht sicherheitsrelevant sind. Beispielsweise muß die flexible Leiterplatte nicht nach dem Zusammenfalten noch einmal ringsum umgefaltet werden. Es ist lediglich notwendig, daß die offene Nahtstelle sehr eng ist und beispielsweise so mit Kleber aufgefüllt ist, daß ein Eindringen an dieser Stelle oder ein Öffnen und Auffalten der flexiblen Leiterplatte nicht möglich ist, ohne daß von der Schutzstruktur der Angriff erkannt wird.

Die Leiterbahn Schutzstruktur besteht bevorzugt aus mehreren einzelnen Leiterbahnen, beispielsweise aus zwei in einer Ebene parallel nebeneinander geführten Leiterbahnen. Vorzugsweise verlaufen diese Leiterbahnen möglichst eng nebeneinander mäanderförmig über die gesamte zu schützende Fläche. Diese Leiterbahnen sind an eine Überwachungseinheit angeschlossen, welche sich ebenfalls im geschützten Sicherheitsbereich befindet.

Diese Überwachungseinheit kann vorzugsweise auch Teil des Sicherheitsprozessors selbst sein. Bei dem Prozessor kann es sich beispielsweise um einen sogenannten VSI- oder VIC (Vertical Integrated Circuit)-Chip handeln, welcher entsprechende Sensoreingänge zur Überwachung aufweist. Die Überwachungseinheit bzw. der betreffende Teil im Sicherheitsprozessor sorgen dann dafür, daß, sobald die Leiterbahnen unterbrochen oder gegeneinander kurzgeschlossen werden, ein Interrupt erzeugt wird und sämtliche sicherheitsrelevanten Daten aktiv gelöscht werden. Bei einem erfolgreichen Versuch, in den sicherheitsrelevanten Bereich einzudringen, können dann die sicherheitsrelevanten Daten nicht mehr ausgelesen werden.

Bei einem besonders sicheren Ausführungsbeispiel weist die flexible Leiterplatte mehrere übereinanderliegende Schutzstrukturen auf. Hierbei können die Leiterbahnen der Leiterbahn-Schutzstrukturen in den verschiedenen übereinanderliegenden Leiterbahnebenen versetzt zueinander angeordnet sein. Vorteilhafterweise geschieht dies in einer solchen Weise, daß die Leiterbahnen in einer Leiterbahnebene genau die Lücken in der Leiterbahn-Schutzstruktur der anderen Ebene abdecken, so daß in Draufsicht auf die Leiterplatte eine blickdichte "Schutzfläche" vorliegt. Ebenso ist es vorteilhaft, wenn sich Leiterbahnen in einer Schutzstruktur befinden, die möglichst immer parallel über der jeweiligen zu schützenden Leiterbahn verlaufen, um den direkten Zugriff von oben oder unten zu unterbinden.

Vorzugsweise weist das Sicherheitsmodul zusätzlich Mittel zum Erzeugen und zum Anlegen eines Überdeckungssignals an Leiterbahnen der Leiterbahn-Schutzstruktur auf. Hierbei wird aktiv ein Sensorstrom, welcher mit Zufallsdaten erzeugt wird, durch die Schutzleiterbahnen geschickt. Dadurch wird das Abhören von Signalen auf den sicherheitsrelevanten, innenliegenden Leiterbahnen, z. B. einer eingegebenen PIN, durch Messung der elektromagnetischen Abstrahlung sehr stark erschwert, da zunächst das Überdeckungs- bzw. Störsignal, welches keinerlei sinnvolle Informationen enthält, ausgefiltert werden müßte.

Da die Erzeugung eines solchen Überdeckung- bzw. Störsignals Energie verbraucht, muß jedoch sichergestellt werden, daß das Signal bei einem plötzlichen Stromausfall sofort abgeschaltet wird, damit die Restenergie im Sicherheitsmodul noch ausreicht, um die sicherheitsrelevanten Daten aktiv zu löschen. Für solche Zwecke befindet sich ein Akku vorzugsweise im geschützten Bereich des Sicherheitsmoduls, welcher die nötige Energie speichert, um bei einer plötzlichen Stromunterbrechung die Löschung der sicherheitsrelevanten Daten zu gewährleisten.

Das Sicherheitsmodul weist vorzugsweise außerdem eine Schnittstelle zum Datenaustausch auf. Hierbei kann es sich um eine Kontaktschnittstelle oder um eine kontaktlos arbeitende Schnittstelle handeln. Selbstverständlich ist es auch möglich, daß das Sicherheitsmodul beide Arten von Schnittstellen aufweist, so daß sowohl ein kontaktbehafteter als auch ein kontaktloser Datenaustausch möglich ist.

Insbesondere kann die Schnittstelle auch eine Steckerleiste umfassen. Diese Steckerleiste ist bevorzugt an einer Kante der flexiblen Leiterplatte angeordnet. Hierbei bietet sich eine Kante der flexiblen Leiterplatte an, die der Faltkante der zusammengefalteten Leiterplatte gegenüberliegt. Der Stecker kann ebenfalls mit dem Kleber, mit welchem die flexible Leiterplatte zusammengeklebt ist, fixiert werden, so daß insgesamt das Modul nach dem Aushärten des Klebers wie aus einem Guß besteht und nicht mehr zerstörungsfrei geöffnet werden kann.

Über einen solchen Stecker ist das Modul an ein beliebiges Gerät, welches eine entsprechende Schnittstelle mit einer Gegensteckleiste aufweist, anschließbar. Es kann daher in den verschiedensten Geräten eingesetzt werden. Bei einer Zerstörung oder einem Fehler des Moduls ist dieses auf sehr einfache Weise austauschbar.

Bei einer bevorzugten Ausführungsform weist das Sicherheitsmodul als Funktionselement zusätzlich eine eigene Ausgabeeinheit oder eine Eingabeeinheit oder sogar eine Ausgabe- und eine Eingabeeinheit auf. Bei der Ausgabeeinheit handelt es sich beispielsweise um ein Display. Bei der Eingabeeinheit kann es sich zum Beispiel um eine Tastatur handeln. Die Tastatur kann sowohl eine starre Tastatur als auch eine flexible Folientastatur sein. Selbstverständlich kann es sich bei der Ausgabe- oder Eingabeeinheit auch um entsprechende Einheiten zur Sprachein- oder -ausgabe handeln. Bei Verwendung eines VSI- bzw. VIC-Sicherheitschips enthält dieser vorzugsweise auch alle weiteren Terminal-Funktionen, einschließlich beispielsweise des Display- oder Tastaturtreibers, und den Sicherheitsspeicher. Dies gewährleistet eine größtmögliche Sicherheit.

Insbesondere wenn es sich um ein flächiges Funktionselement wie ein Display oder eine Tastatur handelt, wird vorzugsweise die zusammengefaltete, flexible Leiterplatte mit einer Fläche des Funktionselements unlösbar verbunden. Das flächige Funktionselement dient hierbei gleichzeitig als eine stabile Modulgrundlage. Dabei kann das Funktionselement an der im zusammengefalteten Zustand außenliegenden Seite der flexiblen Leiterplatte angeordnet sein. Es ist über durch die flexible Leiterplatte hindurchgeführte Anschlüsse mit den Leiterbahnen verbunden. Selbstverständlich ist es auch möglich, daß die zusammengefaltete Leiterplatte das Funktionselement, das heißt beispielsweise das Display oder die Tastatur, zumindest teilweise mit umschließt, so daß sich auch diese Funktionselemente innerhalb des geschützten Bereichs befinden. Zum Teil reicht es aus, wenn der Anschlußbereich des Funktionselements mit von der Schutzstruktur eingeschlossen wird.

Ebenso kann das Display vollständig überdeckt sein. Hierbei ist jedoch darauf zu achten, daß sowohl die Grundlage der flexiblen Leiterbahn als auch die darin befindlichen Leiterbahnen und Elektroden in dem betreffenden Bereich transparent sind. Transparente Elektroden sind beispielsweise aus Indiumzinnoxyd (ITO) herstellbar.

Je nach Anwendungsfall lassen sich so unterschiedliche Sicherheitsniveaus erreichen.

Eine besonders sichere Tastatur, welche eine weitgehend abhörsichere PIN-Eingabe erlaubt, ist dabei eine Folientastatur, deren sämtliche Elemente mit Ausnahme der Beschriftung innerhalb der flexiblen Leiterplatte mit der Schutzstruktur liegen.

Bei einem weiteren Ausführungsbeispiel weist das Funktionselement sowohl eine Tastschaltanordnung als auch eine optisch schaltbare Schicht auf, deren optisches Erscheinungsbild sich unter Einwirkung einer elektrischen Spannung ändert. Die flexible Leiterplatte weist in einer Leiterbahnebene eine Elektrodenschicht auf, die sowohl mit der Tastschaltanordnung zusammenwirkt und auch zur Ansteuerung der optisch schaltbaren Schicht dient. Ein solches Funktionselement, bei dem eine gemeinsame Elektrodenschicht zur Steuerung der Tastschaltanordnung und zur Ansteuerung der optisch schaltbaren Schicht verwendet wird, wird beispielsweise in der DE-A-198 28 978 ausführlich beschrieben. Auf diese Weise lassen sich relativ einfach und kostengünstig berührungssensitive Anzeigenfelder realisieren. Sämtliche in der angegebenen Schrift offenbarten Ausführungsbeispiele können in Kombination mit der vorliegenden Erfindung ausgeführt werden. Die gemeinsame Steuerelektrode kann hierbei sowohl in einer separaten Leiterbahnebene als spezielle Elektrodenschicht innerhalb der flexiblen Leiterplatte ausgeführt sein, es ist aber auch möglich, beispielsweise die Schutzstruktur als Elektrodenschicht mitzuverwenden. Die Schutzstruktur hat dann eine Dreifach-Funktion, wodurch zusätzliche Leiterbahnebenen in der Leiterplatte eingespart werden.

Die Erfindung wird im folgenden unter Hinweis auf die beigefügten Zeichnungen anhand von Ausführungsbeispielen näher erläutert. Die dort dargestellten Merkmale und auch die bereits oben beschriebenen Merkmale können nicht nur in den genannten Kombinationen, sondern auch einzeln oder in anderen Kombinationen erfindungswesentlich sein. Insbesondere wird an dieser Stelle noch darauf hingewiesen, daß alle in der gesamten Beschreibung und in den Ansprüchen beschriebenen gegenständlichen Merkmale auch bezüglich des Verfahrens zur Herstellung eines Sicherheitsmoduls erfindungswesentlich sein können und umgekehrt. Es zeigen:
- Fig. 1a: einen schematischen Querschnitt durch ein erfindungsgemäßes Modul mit Display gemäß einem ersten Ausführungsbeispiel,
- Fig.1b: einen schematischen Querschnitt durch ein erfindungsgemäßes Modul mit Display gemäß einem zweiten Ausführungsbeispiel,
- Fig.1c: einen schematischen Querschnitt durch ein erfindungsgemäßes Modul mit starrer Tastatur,
- Fig. 1d: einen schematischen Querschnitt durch ein erfindungsgemäßes . Modul mit starrer Tastatur und Display,
- Fig. 1e: einen schematischen Querschnitt durch ein erfindungsgemäßes Modul mit Folientastatur,
- Fig.1f: einen schematischen Querschnitt durch ein erfindungsgemäßes Modul mit Folientastatur und Display,
- Fig. 2: einen schematischen Querschnitt durch ein Ausführungsbeispiel einer erfindungsgemäßen flexiblen Sicherheitsleiterplatte.

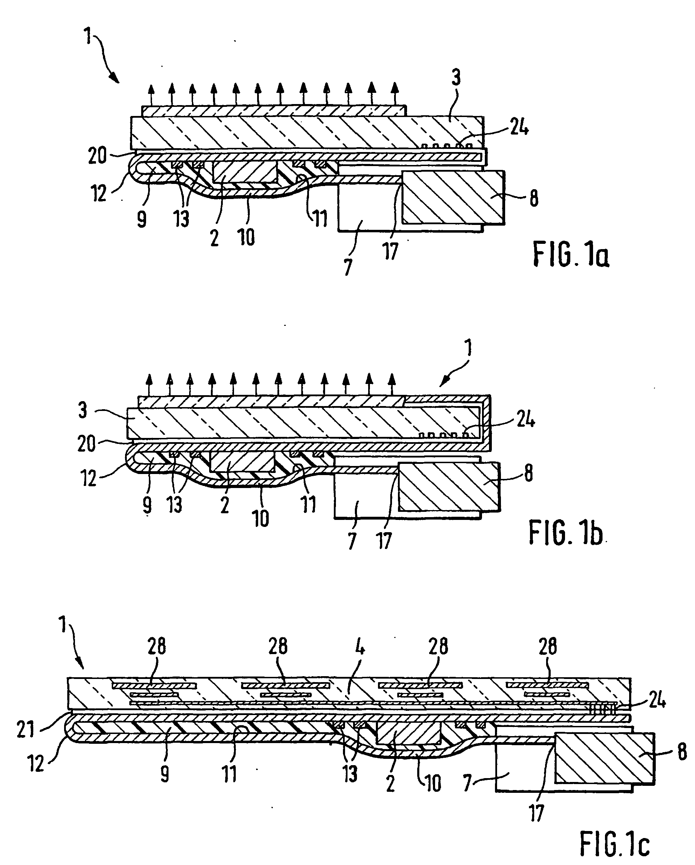

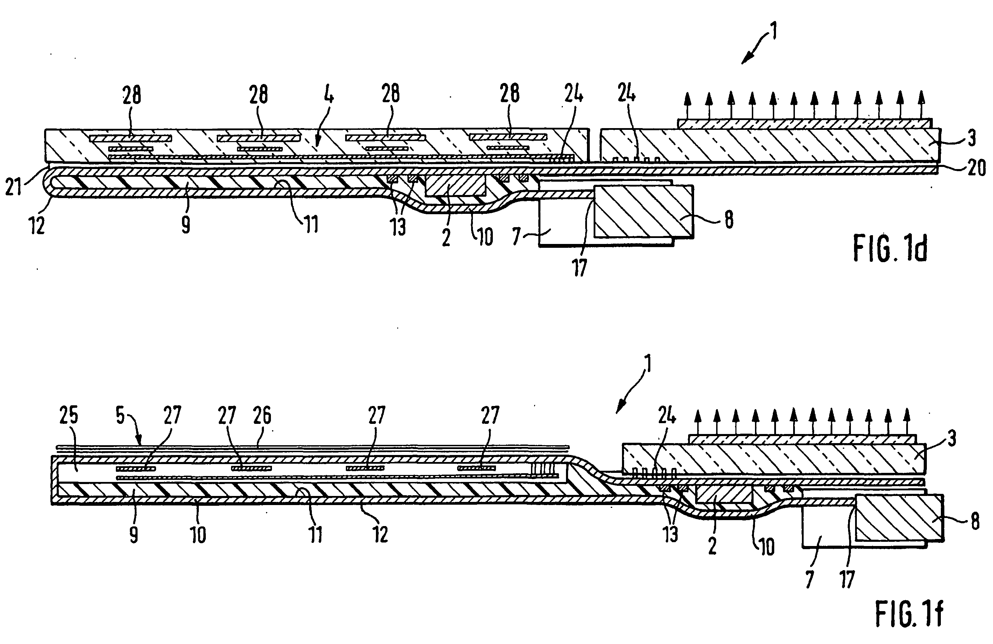

Fig.1 zeigt ein besonders kompaktes Sicherheitsmodul 1 mit einem integrierten Display 3. Es besteht im wesentlichen aus einer flexiblen Leiterplatte 10, auf die auf einer Seite 11, beispielsweise mittels Flip-Chip-Technologie, ein Sicherheitsbauelement 2, im vorliegenden Fall ein VSI-Chip 2, aufgebracht ist. Die flexible Leiterplatte 10 besteht dabei aus einem Stück.

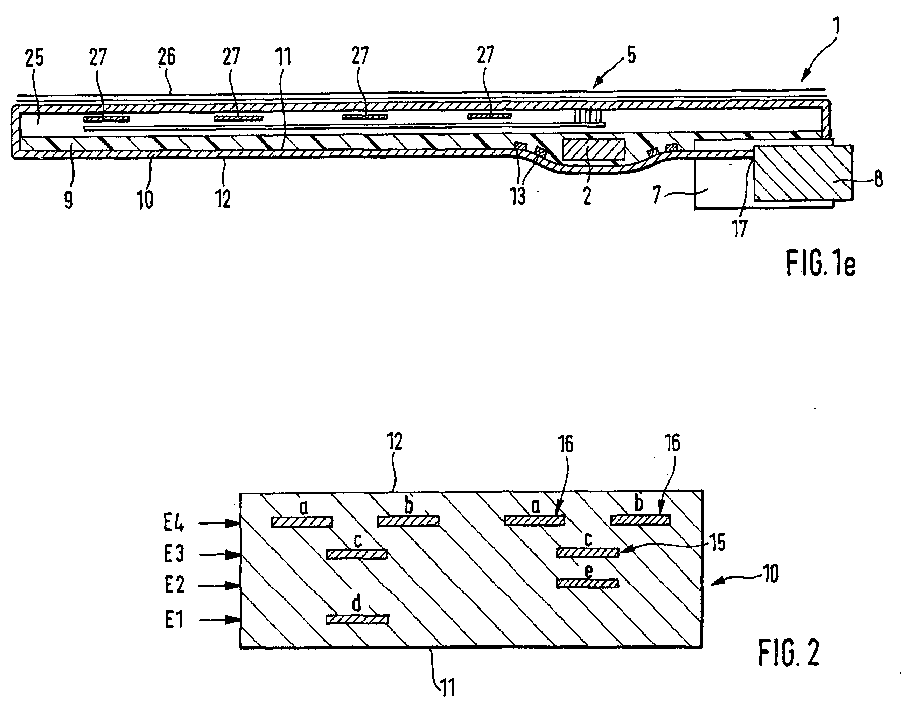

Über innerhalb der flexiblen Leiterplatte 10 verlaufende Leiterbahnen ist dieser Chip 2 mit einer Steckerleiste 8 einer Schnittstelle 7 verbunden. Diese Steckerleiste 8 befindet sich an einer Kante 17 der flexiblen Leiterplatte 10. Weiterhin ist der Chip 2 über entsprechende Leiterbahnen mit Kontakten 21 verbunden, welche auf der dem Chip 2 gegenüberliegende Rückseite 12 der flexiblen Leiterplatte 10 angeordnet sind. Die betreffenden sicherheitsrelevanten Leiterbahnen befinden sich in verschiedenen Leiterbahnebenen E1 und E2, welche nahe der den VSI-Chip 2 aufweisenden Seite 11 der flexiblen Leiterplatte 10 angeordnet sind. In Figur 2 sind diese Leiterbahnen mit d und e bezeichnet.

In Leiterbahnebenen E3, E4, die von der den VSI-Chip 2 aufweisenden Innenseite 11 aus gesehen weiter außen liegen, befinden sich Leiterbahn-Schutzstrukturen 15,16, die aus verschiedenen Leiterbahnen a, b, c bestehen. Die flexible Leiterplatte 10 ist so zusammengefaltet, daß der VSI-Chip 2 und die sicherheitsrelevanten Leiterbahnen d, e möglichst vollständig von den Schutzstrukturen 15, 16 eingeschlossen sind, so daß ein mechanisches Vordringen zu den sicherheitsrelevanten Leiterbahnen d, e oder zum VSI-Chip 2 nicht möglich ist, ohne die Schutzstrukturen 15, 16 zu beschädigen oder zu berühren. Der Zwischenraum zwischen den einander zuweisenden Innenflächen der flexiblen Leiterplatte 10 ist weitgehend vollständig mit einem Kleber, einem sogenannten "Underfiller", ausgefüllt. Mit diesem Kleber 9 ist ebenfalls die Schnittstelle 7 mit der Steckerleiste 8 an der Leiterplatte 10 fixiert. Dieser Kleber 9 ist nach dem Aushärten nicht wieder lösbar, so daß ohne eine Zerstörung der Schutzstrukturen 15,16 das Modul 1 nicht geöffnet werden kann.

Auf einer außenliegenden Seite 12 ist mit seiner Rückseitenfläche 20 das Display 3 so aufgeklebt, daß die Kontakte 24 mit entsprechenden Gegenkontakten (nicht dargestellt) des Displays 3 verbunden sind. Auch dieses Display 3 kann mit "Underfiller" auf die Außenseite 12 der flexiblen Leiterplatte 2 unlösbar aufgeklebt werden.

In der Regel wird bei der Herstellung zunächst der Chip 2 auf entsprechende Kontaktpunkte auf der Innenseite 11 der flexiblen Leiterplatte 10 mit einer bekannten Technologie, wie SMD-, COF- oder Flip-Chip-Technik, aufgesetzt. Anschließend wird an der entsprechenden Kante der Stecker 8 angeschlossen. Dann wird an den erforderlichen Stellen auf die Innenseite 11 der flexiblen Leiterplatte 10 der Kleber 9 aufgetragen und die Leiterplatte 10 zusammengefaltet. Anschließend wird das Display 3 mit seiner Rückseite 20 auf die Außenseite 12 in der richtigen Position aufgeklebt. Das Aufkleben des Displays kann aber auch vor dem Zusammenfalten erfolgen. Nach dem Aushärten des Klebers 9 bildet das Display 3 gemeinsam mit der Leiterplatte 10 mit dem innenliegenden Chip 2 und der Schnittstelle 7 mit der Steckerleiste 8 ein nicht zu öffnendes, starres Modul 1.

Wie in Figur 2 dargestellt, bilden im vorliegenden Fall die Leiterbahnen a, b, welche in einer Leiterbahnebene E4 nebeneinander verlaufen, eine gemeinsame Schutzstruktur 16. Hierzu laufen die Leiterbahnen a, b relativ dicht parallel nebeneinander geführt mäanderförmig nahezu über die gesamte Fläche der flexiblen Leiterplatte 10. In einer zweiten Ebene E3 befinden sich weitere Leiterbahnen c, welche eine zweite Schutzstruktur 15 bilden. Diese Schutzstruktur 15 ist an den Verlauf der in den darunterliegenden Ebenen E1, E2 angeordneten, zu sichernden Leiterbahnen d, e angepaßt, indem die Leiterbahnen c jeweils parallel über einer zu schützenden Leiterbahn d, e verlaufen.

Innerhalb des VSI-Chips 2 befindet sich eine Auswerteeinheit, an die über entsprechende Zuleitungen die Leiterbahnen a, b, c der Schutzstrukturen 15, 16 angeschlossen sind. Werden die Leiterbahnen a, b, c unterbrochen oder gegeneinander kurzgeschlossen, so wird ein entsprechendes Signal an die Überwachungseinrichtung im VSI-Chip 2 abgesandt. Dieser sorgt daraufhin für eine sofortige aktive Löschung der sicherheitsrelevanten Daten. Der VSI-Sicherheitschip 2 enthält im übrigen auch alle weiteren Terminalfunktionen einschließlich beispielsweise des Displaytreibers.

Innerhalb des von den Schutzstrukturen geschützten Bereichs befindet sich außerdem ein Akku (nicht dargestellt), welcher bei einer externen Unterbrechung der Energiezufuhr noch genügend Energie speichert, um die einwandfreie Ausführung aller Sicherheitsfunktionen zu gewährleisten.

Um zu verhindern, daß beispielsweise durch ein Schockgefrieren vor einem Eingriff in das Sicherheitsmodul 1 sämtliche Funktionen außer Kraft gesetzt werden, befinden sich zusätzlich im gesicherten Bereich neben dem VSI-Chip 2 Temperatursensoren 13, welche eine starke Temperaturschwankung registrieren und an die Überwachungseinheit im VSI-Chip 2 weiterleiten. Diese führt ebenfalls zu einer Alarmauslösung und ggf. Löschung der sicherheitsrelevanten Daten. Ebenso kann das Modul weitere Sensoren wie Bewegungssensoren, Lichtsensoren oder dergleichen aufweisen.

In Figur 1b ist ein zweites Ausführungsbeispiel dargestellt, welches sich von dem Ausführungsbeispiel in Figur 1 a nur dadurch unterscheidet, daß auch der Bereich des Displays 3, welcher die Kontaktstelle 24 zu den zum Sicherheitschip 2 führenden Leitungen enthält, durch die flexible Leiterplatte 10 abgedeckt ist. Hierzu ist die Leiterplatte 10 an der entsprechenden Kante einfach nach außen umgeknickt und über die Kante des Displays 3 gezogen und entsprechend unlösbar verklebt worden. Die Schutzstrukturen werden in diesem Abschnitt der Leiterplatte weitergeführt, so daß auch der gesamte Bereich, in dem sich die Steckverbindung 24 befindet, geschützt ist. Falls in diesem die Kante des Displays 3 überlappenden Bereich der flexiblen Leiterplatte 10 noch sicherheitsrelevante Leiterbahnen d, e hineingeführt werden müssen, so kann an der Faltkante, an der die "Außenseite" der flexiblen Leiterplatte 10 zur "Innenseite" wird, ein entsprechender Wechsel in den Leiterbahnebenen der Schutzstrukturen 15, 16 und der sicherheitsrelevanten. Leiterbahnen d, e durchgeführt werden, so daß nun wiederum die sicherheitsrelevanten Leiterbahnen d, e innen liegen und die Schutzstrukturen 15,16 außen. Alternativ ist es natürlich auch möglich, zumindest in diesem Bereich zusätzliche Leiterbahnebenen einzufügen, so daß die sicherheitsrelevanten Leiterbahnen beidseitig von Schutzstrukturen abgedeckt werden.

In Figur 1 c ist ein weiteres Ausführungsbeispiel dargestellt. Anstelle des Displays 3 weist dieses Sicherheitsmodul eine starre Tastatur 4 mit mehreren Tasten 28 auf, welche mit ihrer Rückseitenfläche 21 auf die Außenseite 12 der flexiblen Leiterplatte 10 aufgeklebt ist. Der Aufbau entspricht ansonsten im wesentlichen den Ausführungsbeispielen gemäß den Figuren 1a und 1b. Bei diesem Ausführungsbeispiel wird durch den VSI-Chip auf die Leiterbahnen a, b, c der Schutzstrukturen 15,16 aktiv ein Störsignal aufgegeben, so daß bei der-Eingabe einer PIN-Nummer durch die Tastatur 4 ein Abhören der PIN-Nummer erheblich erschwert wird. Bei diesem Ausführungsbeispiel ist der Tastaturtreiber Bestandteil des VSI-Chips 2.

Figur 1 d zeigt ein weiteres Ausführungsbeispiel mit einer starren Tastatur 4 gemäß Figur 1c und einem zusätzlichen Display 3 gemäß den Figuren 1a und 1b. Selbstverständlich befinden sich hierbei an der Außenseite entsprechende durchgeführte Kontakte 24 für die Tastatur 4 und für das Display 3. Sofern bei einem solchen Ausführungsbeispiel wie in Figur 1d, in dem unter dem Display 3 verlaufenden, überlappenden Bereich der flexiblen Leiterplatte 10 sicherheitsrelevante Leiterbahnen verlaufen, können wieder die Leiterbahnebenen mit den sicherheitsrelevanten Leiterbahnen und die Leiterbahnebenen mit den Schutzstrukturen vertauscht sein, so daß auf der offenen Außenseite in diesem Bereich die Schutzstrukturen wiederum außen liegen und die sicherheitsrelevanten Leiterbahnen an der Rückseite 20 des Displays 3. Es ist aber auch hier möglich, die Leiterbahnen von beiden Seiten mit Schutzstrukturen einzuschließen.

Figur 1 e zeigt eine alternative Ausführungsform mit einer Folientastatur 5. Die flexible Leiterplatte 10 ist hierbei um die Tastaturmatte 25 der Folientastatur 5 herumgezogen, so daß sich alle funktionellen Teile der Folientastatur 5 innerhalb des durch die Schutzstruktur 15,16 eingeschlossenen Bereichs befinden. Da die Leiterplatte 10 flexibel ist und relativ dünn ausgestaltet werden kann, wird die Bedienung der Folientastatur 5 hierdurch nicht beeinträchtigt. Andererseits ist auf diese Weise eine weitgehend vollständig abhörsichere PIN-Eingabe möglich, da -wie zuvor beschrieben - auf die Schutzstrukturen 15, 16 entsprechende Störsignale aufgebracht werden können, die ein Abhören der von den Tasten 27 der Tastatur 5 abgegebenen Signale verhindern. Auf die Außenseite 12 der flexiblen Leiterplatte 10 ist oberhalb der Tastaturmatte 25 lediglich eine beschriftete Abdeckfolie 26 aufgebracht, aus der die jeweilige Position und die Funktion der Tasten 27 in der Tastaturmatte 25 erkennbar ist.

Figur 1 f zeigt ein weiteres Ausführungsbeispiel, bei dem eine Folientastatur 5 mit einem Display 3 kombiniert ist.

Insbesondere durch die Zusammenfassung aller relevanten Funktionen in einem einzigen Sicherheitschip und durch das Einbetten dieses Sicherheitschips innerhalb der zusammengefalteten Sicherheitsleiterplatte sowie das zusätzliche Aufbringen dieser zusammengefalteten Sicherheitsleiterplatte direkt auf das Display oder die Tastatur als Träger, so daß nur die zum Einstecken des Moduls nötigen Steckverbindungen nach außen freiliegen und zugänglich sind, wird eine maximale Sicherheit erreicht. Gleichzeitig ist das Modul äußerst einfach, kostengünstig und kompakt herstellbar.

## Patentansprüche

1. Sicherheitsmodul (1) mit einem Sicherheitsbauelement (2), einem mit dem Sicherheitsbauelement (2) über sicherheitsrelevante Leiterbahnen (d, e) verbundenen weiteren Funktionselement (3, 4, 5) und Mitteln (15, 16) zur Detektion von äußeren Einwirkungen auf das Sicherheitsmodul (1), **dadurch gekennzeichnet, daß** das Sicherheitsbauelement (2) auf einer ersten Seite (11) einer flexiblen, mehrere Leiterbahnebenen (E1, E2, E3, E4) umfassenden Leiterplatte (10) angeordnet ist, in mindestens einer ersten Leiterbahnebene (E1, E2) der mehreren Leiterbahnebenen (EI - E4) die sicherheitsrelevanten Leiterbahnen (d, e) angeordnet sind, in mindestens einer zweiten Leiterbahnebene (E3, E4) der mehreren Leiterbahnebenen (E1 - E4), welche von einer der ersten Seite (11) der flexiblen Leiterplatte (10) gegenüberliegenden zweiten Seite (12) der flexiblen Leiterplatte (10) aus betrachtet vor der ersten Leiterbahnebene (E1, E2) mit den sicherheitsrelevanten Leiterbahnen (d, e) liegt, eine Leiterbahn-Schutzstruktur (15, 16) mit weiteren Leiterbahnen (a, b, c) zur Detektion von äußeren Einwirkungen angeordnet ist, und die flexible Leiterplatte (10) so zusammengefaltet ist, daß das Sicherheitsbauelement (2) und die sicherheitsrelevanten Leiterbahnen (d, e) von der Leiterbahn-Schutzstruktur (15, 16) umschlossen sind, und die im zusammengefalteten Zustand übereinanderliegenden Flächen der ersten Seite (11) der flexiblen Leiterplatte (10) und das dazwischen liegende Sicherheitsbauelement (2) unlösbar untereinander verbunden sind.

2. Sicherheitsmodul nach Anspruch 1, **dadurch gekennzeichnet, daß** das Funktionselement (3, 4, 5) eine Ausgabeeinheit (3) und/ oder eine Eingabeeinheit (4, 5) umfaßt.

3. Sicherheitsmodul nach Anspruch 2, **gekennzeichnet durch** eine Schnittstelle (7) zum Datenaustausch.

4. Sicherheitsmodul nach einem der Ansprüche 1 bis 3, **dadurch gekennzeichnet, daß** die zusammengefaltete flexible Leiterplatte mit einer Fläche (20, 21) des Funktionselements (3, 4, 5) und/ oder der Schnittstelle (7) unlösbar verbunden ist.

5. Sicherheitsmodul nach einem der vorstehenden Ansprüche, **dadurch gekennzeichnet, daß** die Schnittstelle (7) eine Steckerleiste (8) umfaßt und die Steckerleiste (8) an einer Kante (17) der flexiblen Leiterplatte (10) angeordnet ist.

6. Sicherheitsmodul nach einem der vorstehenden Ansprüche, **dadurch gekennzeichnet, daß** das Funktionselement (3, 4) an der zweiten, im zusammengefalteten Zustand außenliegenden Seite (12) der flexiblen Leiterplatte (10) angeordnet ist und über durch die flexible Leiterplatte (10) hindurchgeführte Anschlüsse (24) mit den sicherheitsrelevanten Leiterbahnen (d, e) verbunden ist.

7. Sicherheitsmodul nach einem der vorstehenden Ansprüche, **gekennzeichnet durch** eine Schnittstelle zum kontaktlosen Datenaustausch.

8. Sicherheitsmodul nach einem der vorstehenden Ansprüche, **dadurch gekennzeichnet, daß** die zusammengefaltete Leiterplatte (10) das Funktionselement (3, 5) und/ oder die Schnittstelle (7) zumindest teilweise umschließt.

9. Sicherheitsmodul nach einem der vorstehenden Ansprüche, **dadurch gekennzeichnet, daß** die flexible Leiterplatte (10) mehrere übereinanderliegende Leiterbahnebenen (E3, E4) für die Leiterbahn-Schutzstruktur (15, 16) aufweist.

10. Sicherheitsmodul nach einem der vorstehenden Ansprüche, **dadurch gekennzeichnet, daß** die weiteren Leiterbahnen (a, b, c) der Leiterbahn-Schutzstruktur (15, 16) in verschiedenen, übereinanderliegenden Leiterbahnebenen (E3, E4) versetzt zueinander angeordnet sind.

11. Sicherheitsmodul nach einem der vorstehenden Ansprüche, **dadurch gekennzeichnet, daß** die weiteren Leiterbahnen (a, b) der Leiterbahn-Schutzstruktur (16) zumindest teilweise mäanderförmig verlaufen.

12. Sicherheitsmodul nach einem der vorstehenden Ansprüche, **dadurch gekennzeichnet, daß** die weiteren Leiterbahnen (c) Leiterbahn-Schutzstruktur (15) zumindest teilweise über eine längere Strecke im wesentlichen parallel zumindest zu einer der sicherheitsrelevanten Leiterbahnen (d, e) verlaufen.

13. Sicherheitsmodul nach einem der vorstehenden Ansprüche, **gekennzeichnet durch** Mittel zum Erzeugen und zum Anlegen eines Überdeckungssignals an die weiteren Leiterbahnen (a, b, c) der Leiterbahn-Schutzstruktur (15,16).

14. Sicherheitsmodul nach einem der vorstehenden Ansprüche, **dadurch gekennzeichnet, daß** die weiteren Leiterbahnen (a, b, c) der Leiterbahn-Schutzstruktur (15, 16) an eine von der gefalteten flexiblen Leiterplatte (10) eingeschlossene Überwachungseinheit angeschlossen sind.

15. Sicherheitsmodul nach einem der vorstehenden Ansprüche, **dadurch gekennzeichnet, daß** das Funktionselement eine Tastschaltanordnung und eine optisch schaltbare Schicht aufweist, deren optisches Erscheinungsbild sich unter Einwirkung einer elektrischen Spannung ändert, und die flexible Leiterplatte in einer Leiterbahnebene eine Elektrodenschicht aufweist, die mit der Tastschaltanordnung zusammenwirkt und auch zur Ansteuerung der optisch schaltbaren Schicht dient.

16. Sicherheitsmodul nach einem der vorstehenden Ansprüche, **dadurch gekennzeichnet, daß** das Sicherheitsbauelement (2) einen VSI-Chip (2) umfaßt.

17. Flexible Sicherheitsleiterplatte (10) für ein Sicherheitsmodul nach einem der Ansprüche 1 bis 16, mit mehreren Leiterbahnebenen (E1 - E4), wobei mindestens in einer ersten Leiterbahnebene (E1, E2) sicherheitsrelevante Leiterbahnen (d, e) angeordnet sind, welche zur Anbindung an ein Sicherheitsbauelement (2) an einer ersten Seite(11) der flexiblen Sicherheitsleiterplatte (10) Kontaktstellen aufweisen, und wobei in mindestens einer zweiten Leiterbahnebene (E3, E4), welche von einer der ersten Seite (11) der flexiblen Leiterplatte (10) gegenüberliegenden zweiten Seite (12) der flexiblen Leiterplatte (10) aus betrachtet vor der ersten Leiterbahnebene (E1, E2) mit den sicherheitsrelevanten Leiterbahnen (d, e) liegt, eine Leiterbahn-Schutzstruktur (15,16) mit weiteren Leiterbahnen (a, b, c) zur Detektion von äußeren Einwirkungen angeordnet ist.

18. Flexible Sicherheitsleiterplatte nach Anspruch 17, **gekennzeichnet durch** auf der ersten Seite (11) angeordnete Kontaktstellen zur Anbindung der Leiterbahn-Schutzstruktur (15,16) an eine Überwachungseinheit.

19. Flexible Sicherheitsleiterplatte nach Anspruch 17, **gekennzeichnet durch** mehrere übereinander angeordnete zweite Leiterbahnebenen (E3, E4) der Leiterbahn-Schutzstruktur (15,16).

20. Flexible Sicherheitsleiterplatte nach einem der Ansprüche 17 bis 19, **dadurch gekennzeichnet, daß** die weiteren Leiterbahnen (a, b, c) der Leiterbahn-Schutzstruktur (15,16) in verschiedenen, übereinander liegenden zweiten Leiterbahnebenen (E3, E4) zumindest teilweise versetzt zueinander angeordnet sind.

21. Flexible Sicherheitsleiterplatte nach einem der Ansprüche 17 bis 20, **dadurch gekennzeichnet, daß** die weiteren Leiterbahnen (a, b) der Leiterbahn-Schutzstruktur (16) zumindest teilweise mäanderförmig verlaufen.

22. Flexible Sicherheitsleiterplatte nach einem der Ansprüche 17 bis 21, **dadurch gekennzeichnet, daß** die weiteren Leiterbahnen (c) der Leiterbahn-Schutzstruktur (15) zumindest teilweise über eine längere Strecke im wesentlichen parallel über zumindest einer der sicherheitsrelevanten Leiterbahnen (d, e) verlaufen.

23. Verfahren zur Herstellung eines Sicherheitsmoduls (1) mit den Merkmalen nach einem der Ansprüche 1 bis 16, mit folgenden Verfahrensschritten:
- Erzeugen einer flexiblen Leiterplatte (10) mit den Merkmalen nach einem der Ansprüche 17 bis 22,
- Aufbringen des Sicherheitsbauelements (2) auf der ersten Seite der flexiblen Leiterplatte (10),
- Zusammenfalten der flexiblen Leiterplatte (10) so, daß das Sicherheitsbauelement (2) und die sicherheitsrelevanten Leiterbahnen (d, e) von der Leiterbahn-Schutzstruktur (15,16) umschlossen sind, unter unlösbarem Verbinden der im zusammengefalteten Zustand übereinanderliegenden Flächen der ersten Seite (11) der flexiblen Leiterplatte (10) und des dazwischenliegenden Sicherheitsbauelements (2) untereinander.

24. Verfahren nach Anspruch 23, **dadurch gekennzeichnet, daß** das Sicherheitsbauelement (2) mit einer Technik, ausgewählt aus COF-Technik, SMD-Technik und Flip-Chip-Technik, mit der flexiblen Leiterplatte (10) verbunden wird.

25. Verfahren nach Anspruch 23 oder 24, **dadurch gekennzeichnet, daß** die im zusammengefalteten Zustand übereinanderliegenden Flächen der ersten Seite (11) der flexiblen Leiterplatte (10) mit dem darauf angeordneten Sicherheitsbauelement (2) untereinander mit einem unlösbaren Kleber (9) verklebt werden.

26. Verfahren nach einem der Ansprüche 23 bis 25, **dadurch gekennzeichnet, daß** die zusammengefaltete flexible Leiterplatte (10) mit einer Fläche (20, 21) des Funktionselements (3, 4, 5) und/ oder einer Schnittstelle (7) unlösbar verbunden wird.

## Claims

1. Security module (1) with a security component (2), an additional functional element (3, 4, 5) connected to the security component (2) via security-relevant conductive paths (d, e) and means (15, 16) for detecting external actions on the security module (1), **characterized in that** the security component (2) is disposed on a first side (11) of a flexible circuit board (10) comprising a plurality of conductive path levels (E1, E2, E3, E4), in at least one first conductive path level (E1, E2) of the plurality of conductive path levels (E1 - E4) the security-relevant conductive paths (d, e) are disposed, in at least one second conductive path level (E3, E4) of the plurality of conductive path levels (E1 - E4), which is located, when viewed from a second side (12) of the flexible circuit board (10) that is opposite to the first side (11) of the flexible circuit board (10), before the first conductive path level (E1, E2) with the security-relevant conductive paths (d, e), is disposed a conductive path protection structure (15, 16) with additional conductive paths (a, b, c) for detecting external actions, and the flexible circuit board (10) is folded up such that the security component (2) and the security-relevant conductive paths (d, e) are enclosed by the conductive path protection structure (15,16), and the surfaces of the first side (11) of the flexible circuit board (10) lying one on top of the other in a folded-up state and the intermediate security component (2) are undetachably connected to each other.

2. Security module according to claim 1, **characterized in that** the functional element (3, 4, 5) comprises an output device (3) and/ or an input device (4, 5).

3. Security module according to claim 2, **characterized by** an interface (7) for exchanging data.

4. Security module according to one of the claims 1 to 3, **characterized in that** the folded-up flexible circuit board is undetachably connected to a surface (20, 21) of the functional element (3, 4, 5) and/ or the interface (7).

5. Security module according to one of the above claims, **characterized in that** the interface (7) comprises a plug strip (8) and the plug strip (8) is disposed on an edge (17) of the flexible circuit board (10).

6. Security module according to one of the above claims, **characterized in that** the functional element (3, 4) is disposed on the second, in a folded-up state external side (12) of the flexible circuit board (10) and is connected to the security-relevant conductive paths (d, e) via connections (24) that are passed through the flexible circuit board (10).

7. Security module according to one of the above claims, **characterized by** an interface for a contactless data exchange.

8. Security module according to one of the above claims, **characterized in that** the folded-up circuit board (10) at least partially encloses the functional element (3, 5) and/ or the interface (7).

9. Security module according to one of the above claims, **characterized in that** the flexible circuit board (10) has a plurality of conductive path levels (E3, E4) lying one on top of the other for the conductive path protection structure (15, 16).

10. Security module according to one of the above claims, **characterized in that** the further conductive paths (a, b, c) of the conductive path protection structure (15,16) are disposed in a mutually offset manner in different conductive path levels (E3, E4) that lie one on top of the other.

11. Security module according to one of the above claims, **characterized in that** the further conductive paths (a, b) of the conductive path protection structure (16) extend at least partially in a meandering fashion.

12. Security module according to one of the above claims, **characterized in that** the further conductive paths (c) conductive path protection structure (15) along a longer distance extend at least partially mainly in parallel to at least one of the security-relevant conductive paths (d, e).

13. Security module according to one of the above claims, **characterized by** means for generating and presenting an overlapping signal to the further conductive paths (a, b, c) of the conductive path protection structure (15,16).

14. Security module according to one of the above claims, **characterized in that** the further conductive paths (a, b, c) of the conductive path protection structure (15, 16) are connected to a monitoring unit that is enclosed by the folded flexible circuit board (10).

15. Security module according to one of the above claims, **characterized in that** the functional element has a push-button circuit and an optically switchable layer, the optical appearance of which changes under the action of an electrical voltage, and the flexible circuit board in one conductive path level has an electrode layer that cooperates with the push-button circuit and also serves for activating the optically switchable layer.

16. Security module according to one of the above claims, **characterized in that** the security component (2) has a VSI chip (2).

17. Flexible security circuit board (10) for a security module according to one of the claims 1 to 16, with a plurality of conductive path levels (E1 - E4), wherein in at least one first conductive path level (E1, E2) are disposed security-relevant conductive paths (d, e), which for the purpose of connection to a security component (2) on a first side (11) of the flexible security circuit board (10) have contact pads, and wherein in at least one second conductive path level (E3, E4), which is located, when viewed from a second side (12) of the flexible circuit board (10) that is opposite to the first side (11) of the flexible circuit board (10), before the first conductive path level (E1, E2) with the security-relevant conductive paths (d, e), is disposed a conductive path protection structure (15, 16) with additional conductive paths (a, b, c) for detecting external actions.

18. Flexible security circuit board according to claim 17, **characterized by** contact pads disposed on the first side (11) for connecting the conductive path protection structure (15, 16) to a monitoring unit.

19. Flexible security circuit board according to claim 17, **characterized by** a plurality of second conductive path levels (E3, E4) of the conductive path protection structure (15, 16) disposed one on top of the other.

20. Flexible security circuit board according to one of the claims 17 to 19, **characterized in that** the further conductive paths (a, b, c) of the conductive path protection structure (15, 16) are disposed in an at least partially mutually offset manner in different second conductive path levels (E3, E4) that lie one on top of the other.

21. Flexible security circuit board according to one of the claims 17 to 20, **characterized in that** the further conductive paths (a, b) of the conductive path protection structure (16) extend at least partially in a meandering fashion.

22. Flexible security circuit board according to one of the claims 17 to 21, **characterized in that** the further conductive paths (c) of the conductive path protection structure (15) along a longer distance extend at least partially mainly in parallel over at least one of the security-relevant conductive paths (d, e).

23. Method for producing a security module (1) with the features according to one of the claims 1 to 16, with the following procedure steps:
- manufacturing a flexible circuit board (10) with the features according to one of the claims 17 to 22,
- applying the security component (2) onto the first side of the flexible circuit board (10),
- folding up the flexible circuit board (10) such that the security component (2) and the security-relevant conductive paths (d, e) are enclosed by the conductive path protection structure (15,16), the surfaces of the first side (11) of the flexible circuit board (10) lying one on top of the other in a folded-up state and the intermediate security component (2) being undetachably connected to each other.

24. Method according to claim 23, **characterized in that** the security component (2) is connected to the flexible circuit board (10) by means of a technique chosen from COF technique, SMD technique and flip-chip technique.

25. Method according to claim 23 or 24, **characterized in that** the surfaces of the first side (11) of the flexible circuit board (10) lying one on top of the other in a folded-up state are bonded to the security component (2) disposed thereon with an undetachable adhesive (9).

26. Method according to one of the claims 23 to 25, **characterized in that** the folded-up flexible circuit board (10) is undetachably connected to a surface (20, 21) of the functional element (3, 4, 5) and/ or an interface (7).

## Revendications

1. Module de sécurité (1) doté d'un composant de sécurité (2), et d'un autre ensemble fonctionnel (3, 4, 5) relié au composant de sécurité (2) par des pistes conductrices relatives à la sécurité (d, e) et de moyens (15, 16) de détection d'influences externes sur le module de sécurité (1), **caractérisé en ce que** le composant de sécurité (2) est placé sur un premier côté (11) d'une carte imprimée flexible (10) dotée de plusieurs niveaux de pistes conductrices (E1, E2, E3, E4), que les pistes conductrices relatives à la sécurité (d, e) sont placées au moins sur un premier niveau de pistes conductrices (E1, E2) parmi plusieurs niveaux de pistes conductrices (E1-E4), qu'une structure de protection pour les pistes conductrices (15, 16) dotée d'autres pistes conductrices (a, b, c) pour la détection d'influences externes est appliquée sur au moins un second niveau de pistes conductrices (E3, E4) parmi plusieurs niveaux de pistes conductrices (E1-E4) lequel, vu depuis un deuxième côté (12) de la carte imprimée flexible (10) se trouvant en face du premier côté (11) de la carte imprimée flexible (10), se trouve devant le premier niveau de pistes conductrices (E1, E2) avec les pistes conductrices relatives à la sécurité (d, e), que la carte imprimée flexible (10) est pliée de manière à ce que le composant de sécurité (2) ainsi que les pistes conductrices relatives à la sécurité (d, e) soient enfermés par la structure de protection des pistes conductrices (15, 16) et que les faces pliées et ainsi superposées du premier côté (11) de la carte imprimée flexible (10) et le composant de sécurité (2), se trouvant entre les deux faces, soient inséparablement liés.

2. Module de sécurité selon la revendication 1, **caractérisé en ce que** l'ensemble fonctionnel (3, 4, 5) contient une unité de sortie (3) et/ou une unité d'entrée (4, 5).

3. Module de sécurité selon la revendication 2, **caractérisé par** une interface (7) pour un échange de données.

4. Module de sécurité selon l'une quelconque des revendications 1 à 3, **caractérisé en ce que** la carte imprimée flexible (10) pliée est inséparablement liée à une face (20, 21) de l'ensemble fonctionnel (3, 4, 5) et/ou de l'interface (7).

5. Module de sécurité selon l'une quelconque des revendications précédentes, **caractérisé en ce que** l'interface (7) contient un connecteur plat (8), ce connecteur plat (8) étant appliqué sur une arête (17) de la carte imprimée flexible (10).

6. Module de sécurité selon l'une quelconque des revendications précédentes, **caractérisé en ce que** l'ensemble fonctionnel (3, 4) est aligné sur le second côté (12) de la carte imprimée flexible (10) qui, étant plié, se trouve à l'extérieur et qu'il est relié aux pistes conductrices relatives à la sécurité (d, e) par des connexions (24) passées à travers la carte imprimée flexible (10).

7. Module de sécurité selon l'une quelconque des revendications précédentes, **caractérisé par** une interface pour un échange de données sans contact.

8. Module de sécurité selon l'une quelconque des revendications précédentes, **caractérisé en ce que** la carte imprimée (10) pliée enferme au moins en partie l'ensemble fonctionnel (3, 5) et/ou l'interface (7).

9. Module de sécurité selon l'une quelconque des revendications précédentes, **caractérisé en ce que** la carte imprimée flexible (10) présente plusieurs niveaux de pistes conductrices superposés (E3, E4) pour la structure de protection des pistes conductrices (15, 16).

10. Module de sécurité selon l'une quelconque des revendications précédentes, **caractérisé en ce que** les autres pistes conductrices (a, b, c) de la structure de protection des pistes conductrices (15, 16) sont appliquées en quinconce dans différents niveaux de pistes conductrices (E3, E4).

11. Module de sécurité selon l'une quelconque des revendications précédentes, **caractérisé en ce que** les autres pistes conductrices (a, b) de la structure de protection des pistes conductrices (16) sont alignées au moins en partie sous forme de méandres.

12. Module de sécurité selon l'une quelconque des revendications précédentes, **caractérisé en ce que** les autres pistes conductrices (c) de la structure de protection des pistes conductrices (15) passent au moins en partie sur une certaine longueur de trajet sensiblement parallèlement à au moins une des pistes conductrices relatives à la sécurité (d, e).

13. Module de sécurité selon l'une quelconque des revendications précédentes, **caractérisé par** des moyens pour la réalisation et l'application d'un signal de masquage vers les autres pistes conductrices (a, b, c) de la structure de protection des pistes conductrices (15, 16).

14. Module de sécurité selon l'une quelconque des revendications précédentes, **caractérisé en ce que** les autres pistes conductrices (a, b, c) de la structure de protection des pistes conductrices (15, 16) sont connectées à une unité de surveillance intégrée dans la carte imprimée flexible (10) pliée.

15. Module de sécurité selon l'une quelconque des revendications précédentes, **caractérisé en ce que** l'ensemble fonctionnel dispose d'un dispositif à touches et d'une couche à signal optique dont l'aspect change en appliquant une tension électrique, et que la carte imprimée flexible présente dans un niveau de pistes conductrices une couche d'électrodes fonctionnant avec ce dispositif à touches qui sert de même à l'excitation de la couche optique.

16. Module de sécurité selon l'une quelconque des revendications précédentes, **caractérisé en ce que** le composant de sécurité (2) comprend une puce VSI (2).

17. Carte imprimée de sécurité flexible (10) pour un module de sécurité selon l'une des revendications 1 à 16 avec plusieurs niveaux de pistes conductrices (E1-E4), sachant que les pistes conductrices relatives à la sécurité (d, e) lesquelles disposent de contacts pour la connexion à un composant de sécurité (2) sur un premier côté (11) de la carte imprimée de sécurité flexible (10) sont appliquées au moins sur un premier niveau de pistes conductrices (E1, E2) et qu'une structure de protection pour les pistes conductrices (15, 16) dotée d'autres pistes conductrices (a, b, c) pour la détection d'influences externes est appliquée au moins sur un second niveau de pistes conductrices (E2, E3) lequel, vu depuis un deuxième côté (12) de la carte imprimée flexible (10) se trouvant en face du premier côté de la carte imprimée flexible (10), se trouve devant le premier niveau de piste conductrice (E1, E2) avec les pistes conductrices relatives à la sécurité (d, e).

18. Carte imprimée de sécurité flexible selon la revendication 17, **caractérisé par** des contacts alignés sur le premier côté (11) pour la connexion de la structure de protection pour les pistes conductrices (15, 16) à une unité de surveillance.

19. Carte imprimée de sécurité flexible selon la revendication 17, **caractérisé par** plusieurs seconds niveaux de pistes conductrices (E3, E4) de la structure de protection pour les pistes conductrices (15, 16) superposés.

20. Carte imprimée de sécurité flexible selon l'une quelconque des revendications 17 à 19, **caractérisé en ce que** les autres pistes conductrices (a, b, c) de la structure de protection pour les pistes conductrices (15, 16) sont appliquées, au moins en partie, en quinconce dans différents seconds niveaux de pistes conductrices (E3, E4) superposés.

21. Carte imprimée de sécurité flexible selon une des revendications 17 à 20, **caractérisé en ce que** les autres pistes conductrices (a, b) de la structure de protection pour les pistes conductrices (16) sont alignées au moins en partie sous forme de méandres.

22. Carte imprimée de sécurité flexible selon une des revendications 17 à 21, **caractérisé en ce que** les autres pistes conductrices (c) de la structure de protection des pistes conductrices (15) passent au moins en partie sur une certaine longueur de trajet parallèlement à au moins une des pistes conductrices relatives à la sécurité (d, e).

23. Procédé de fabrication d'un module de sécurité (1) avec les caractéristiques selon une des revendications 1 à 16 comportant les étapes suivantes consistant à :
- fabriquer une carte imprimée flexible (10) avec les caractéristiques selon une des revendications 17 à 22,
- appliquer un composant de sécurité (2) sur le premier côté de la carte imprimée flexible (10),
- plier la carte imprimée flexible (10) de manière à ce que le composant de sécurité (2) et les pistes conductrices relatives à la sécurité (d, e) soient enfermés par la structure de protection des pistes conductrices (15, 16) et que les faces pliées et ainsi superposées du premier côté (11) de la carte imprimée flexible (10) et le composant de sécurité (2), se trouvant entre les deux faces, soient inséparablement liés.

24. Procédé selon la revendication 23, **caractérisé en ce que** le composant de sécurité (2) est relié à la carte imprimée flexible (10) suivant les techniques puce sur circuit flexible (COF), montage en surface (SMD) ou puce retournée (Flip-Chip).

25. Procédé selon la revendication 23 ou 24, **caractérisé en ce que** les faces du premier côté de la carte imprimée flexible (10) se trouvant superposées après la procédure de pliage et dotées du composant de sécurité (2) peuvent être collées les unes avec les autres avec une colle inséparable (9).

26. Procédé selon une des revendications 23 à 25, **caractérisé en ce que** la carte imprimée flexible (10) pliée est reliée inséparablement à une face (20, 21) de l'ensemble fonctionnel (3, 4, 5) et/ou d'une interface (7).
